Europäisches Patentamt

European Patent Office

Office européen des brevets

(11) Veröffentlichungsnummer: **0 169 994**
**A1**

(12) **EUROPÄISCHE PATENTANMELDUNG**

(21) Anmeldenummer: 85106262.0

(22) Anmeldetag: 22.05.85

(51) Int. Cl.⁴: **H 02 B 1/08**
**H 02 B 1/20**

(30) Priorität: 12.07.84 CH 3401/84

(43) Veröffentlichungstag der Anmeldung:
05.02.86 Patentblatt 86/6

(84) Benannte Vertragsstaaten:
AT BE CH DE FR GB IT LI LU NL SE

(71) Anmelder: Karl Schweizer AG
Hammerstrasse 121
CH-4021 Basel(CH)

(72) Erfinder: Schmidlin, René
Eisenbahnweg 87
CH-4125 Riehen(CH)

(74) Vertreter: Troesch, Hans Alfred, Dr. Ing. et al,
Walchestrasse 19
CH-8035 Zürich(CH)

(54) Einschubschrank für mindestens einen Einschub.

(57) Um bei einem Einschubschrank, elektrisch ab dreiphasigem Netz betrieben, eine höchstmögliche Flexibilität zu
erzielen, so beispielsweise für das Aufschalten von Notstromenergie, für die Umverteilung der Energie, die Phasenverschiebung von Netzspannungen innerhalb des Schrankes,
werden am Schrank mindestens zwei Sätze von mindestens
drei vertikal verlaufenden Stromschienen (3, 5) vorgesehen.
Entsprechend weisen die Einschübe ein oder zwei Abgriffssätze (9) auf.

EP 0 169 994 A1

Croydon Printing Company Ltd.

FIG.1

0169994


- 1 -


Einschubschrank für mindestens einen Einschub

Die vorliegende Erfindung betrifft einen Einschubschrank für mindestens einen Einschub, für dessen
Betrieb ab dreiphasigem Netz sowie einen Einschubschrank
mit mindestens einem Einschub.

Es ist bekannt, bei Einschubschränken deren Einschübe
ab dreiphasigem Netz, mit oder ohne Nulleiter, betrieben werden, vorzugsweise auf der Schrankhinterseite, drei oder vier Stromschienen vorzusehen, zur
Verteilung der dreiphasigen Netzspannung an die vorzusehenden Einschübe. Die Stromschienen werden entsprechend den den Einschüben im Schrank gesamthaft
zuzuführenden Stromwerten bemessen. Bei Netzausfall
wird der gesamte Schrank mit den darin vorgesehenen
Einschüben stromlos und es müssen im weiteren die
Stromschienen so bemessen werden, dass sie bezüglich
Leiterquerschnitt den höchsten Strombeanspruchungen
genügen, die in einer von vielen möglichen Einschub-
Kombinationen entstehen können. Damit müssen auch
entsprechend bemessene Anschlussstücke an allen Einschüben, vorgesehen werden, auf die möglicherweise
anfallende Strombelastung, was die Bereitstellung verschiedener Steckverbindungen notwendig macht, für alle allenfalls vorzusehenden Einschübe, die somit für eine Vielzahl dieser Einschübe stark überdimensioniert sind, nämlich für diejenigen, die mit geringen Stromwerten betrieben werden.

Die vorliegende Erfindung bezweckt die obgenannten Nachteile zu beheben.

Dies wird dadurch erreicht, schrankseitig, dass im Schrank mindestens zwei Sätze von je mindestens drei vertikal verlaufenden Stromschienen angeordnet sind.

Dadurch wird eine wesentlich höhere Flexibilität erzielt, was die Energieverteilung an vorzusehende Einschübe anbelangt.

Vorzugsweise zeichnet sich der Einschubschrank weiter dadurch aus, dass elektrische Umschaltorgane vorgesehen sind, die den elektrischen Eingang für mindestens einen Einschub auf den einen und/oder auf den anderen Satz schalten.

Damit ist die Möglichkeit gegeben, wenn die Umschaltorgane entweder auf den einen Satz oder auf den anderen Satz umschalten, den einen Stromschienensatz, beispielsweise als Notstromsatz zu betreiben und bei Ausfall des ersten Stromschienensatzes schrankintern auf den zweiten, d.h. den Notstromsatz, umzuschalten.

Anderseits ist aber auch die Möglichkeit gegeben, in der UND-Verbindung die Stromschienensätze parallel zu schalten,dies beispielsweise wenn die Stromwerte im einen Stromschienensatz dessen zugelassene Belastung überschreiten. Damit können aber an vorzusehenden Einschüben auf die vorgesehenen, nicht auf maximal mögliche Belastung dimensionierte Stromschienen zugeschnittene Abgriffe vorgesehen werden und es kann bei Bedarf pro Phase auf zwei Stromschienensätze gegriffen werden, durch Vorsehen von zwei Abgriffen pro Phase an den entsprechenden Einschüben.

Hierzu werden die Umschaltorgane vorzugsweise durch Betriebsbedingungen auf dem angeschalteten Stromschienensatz angesteuert. Dadurch, dass die Umschaltorgane als Notstromumschalter ausgebildet sind, die bei Ausfall der Energie am einen Stromschienensatz auf den anderen umschalten, wird schrankintern dessen elektrische Speisung sichergestellt.

Dadurch, dass die Umschaltorgane als Ueberlastschalter ausgebildet sind, um die Sätze bei Ueberlast des einen Stromschienensatzes parallel zu schalten, wird flexibel der schrankinterne Leiterquerschnitt der Energiezuspeisung den statischen oder momentanen Bedürfnissen angepasst.

Im weiteren wird es durch das Vorsehen von mindestens zwei Stromschienensätzen am Schrank und mit mindestens einem Einschub möglich, den Einschub als Energieverteileinschub auszubilden,eingangsseitig mit dem einen und ausgangsseitig mit dem anderen Satz der Stromschienen verbunden, wobei dieser Schrank beispielsweise Kompensationsimpedanzen für die Phasen beinhalten kann.

Vorzugsweise wird zur weitgehendsten Ausnützung der
obgenannten Zweisatztechnik vorgesehen, dass die
Einschub/Stromschienenverbindungen an mindestens
einem der Einschübe mittels je einzeln montierbarer
Steckverbindern realisiert werden. Die obgenannten
Umschaltorgane können, wie erwähnt, am Schrank oder
aber an einem Einschub vorgesehen sein.

Die Erfindung wird anschliessend beispielsweise anhand von Figuren erläutert.

Es zeigen:

Fig. 1 die perspektivische Ansicht einer Hinterwandpartie eines erfindungsgemässen Einschubschrankes sowie die Hinterpartie eines in einen
derartigen Einschubschrank einschiebbaren
Einschubes,

Fig. 2 die schematische, elektrische Beschaltung
eines Schrankes oder eines Einschubes daran,
für Notstromumschaltung,

Fig. 3 ein elektrisches Schema einer Ueberlastschalter-Anordnung an einem Einschub oder am erfindungsgemässen Einschubschrank,

Fig. 4   die Aufschaltung unterschiedlicher Einschübe
an einem erfindungsgemässen Einschubschrank.

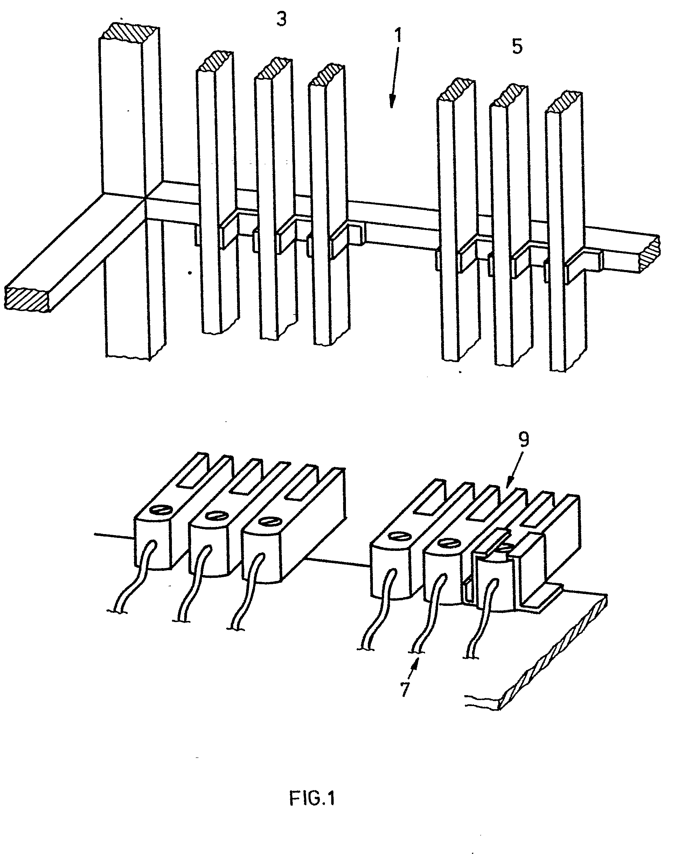

Gemäss Fig. 1 ist auf der Rückseite 1 eines Einschubschrankes ein erster Stromschienensatz 3 vertikal
verlaufend angeordnet sowie ein zweiter Stromschienensatz 5, ebenfalls vertikal verlaufend. Die Stromschienensätze 3 bzw. 5 umfassen für jede Netzphase eine
Stromschiene, allenfalls zusätzlich eine für den
Nulleiter. Ein in einen derart ausgebildeten Einschubschrank einzuschiebender Einschub 7 weist auf
seiner Hinterseite eine Mehrzahl separat montierbarer
zangenförmiger Abgriffe 9 auf, selbstverständlich
in der für einen spezifisch betrachteten Einschub
bzw. dessen Phasenbedürfnissen ausgelegten Anzahl.
Die zangenartigen Abgriffe 9 übergreifen beim Einschieben des Einschubes 7 gezielt zwei oder mehr der
am Einschubschrank vorgesehenen, in die Sätze 3 und
5 gruppierte Stromschienen.

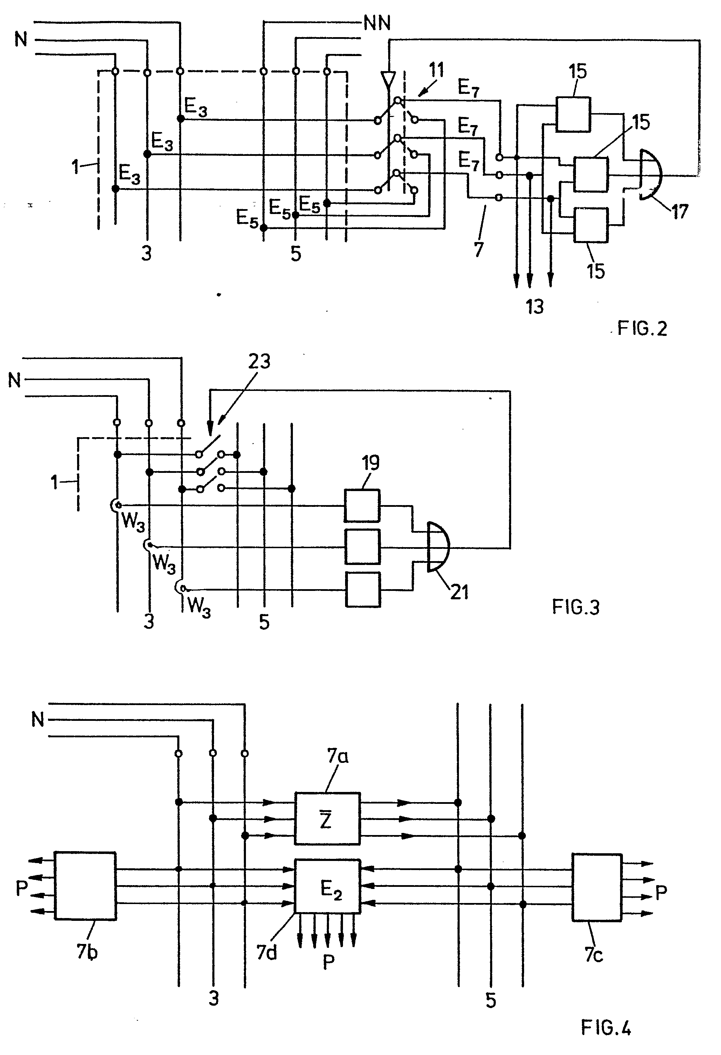

Die hohe Flexibilität, die mit einem derart erfindungsgemäss ausgebildeten Einschubschrank erzielt
wird, wird nun beispielsweise anhand der Fig. 2 bis
4 erläutert.

In Fig. 2 sind, gestrichelt umrandet, schematisch
die vertikal verlaufenden Stromschienensätze 3 und
5 am Schrank 1 dargestellt. Ein vorgesehener Einschub greift die Stromschienen des Satzes 3 an den
Punkten $E_3$ ab sowie die Stromschienen des Satzes 5,
an den mit $E_5$ bezeichneten Stellen. Der Einschub umfasst weiter einen dreiphasigen Umschalter 11, welcher die Eingänge $E_7$ des Einschubes resp. weiterverarbeitender Organe, über die Leitungen 13 gespiesen, entweder auf den Satz 3 oder auf den Satz 5 schaltet. Die Eingänge $E_7$ des Einschubes 7 werden auf beispielsweise drei Komparatoreinheiten 15 geführt, an denen die vorherrschenden Phasenspannungen auf Vorhandensein oder Nichtvorhandensein geprüft werden. Fällt eine oder mehrere der Phasenspannungen aus, so wirken die in einer schematisch bei 17 eingetragenen ODER-Verknüpfung ausgangsseitig verbundenen Komparatoreinheiten 15 auf den Umschalter 11, welch letzterer dann, beispielsweise vom Stromschienensatz 3, mit dem Normalnetz N verbunden, auf das Notnetz NN, mit dem Satz 5 verbunden, umschaltet. Damit wird schrankintern mit Vorsehen eines derartigen, als Notstromumschalter konzipierten Einschubes sichergestellt, dass der gesamte Schrank mit den allenfalls weiteren vorgesehenen Einschüben auch bei Ausfall des Normalnetzes unter Spannung gehalten wird. Es versteht sich von selbst, dass dies in gewissen Einsatzfällen, wie beispielsweise in Spitälern, ausserordentlich wichtig ist, und dass es vorteilhaft ist, die Notstromumschaltung an Einschubschränken vorzusehen, die zusätzlich für weitere Einschubfunktionen verwendet werden können.

Im weiteren können Umschalter 11, Komparatoren 15, ODER-Verknüpfung 17 am Schrank selbst vorgesehen sein und die Einschübe eingangsseitig auf die Leitungen 13 gesteckt sein. Der Normalnetzsatz 3 kann auch bei Netzausfall vom Netz getrennt werden und dann auf den Notstromsatz 5 geschaltet werden, was wiederum durch einen Einschub oder direkt am Schrank erfolgen kann.

Gemäss Fig. 3 ist der Einschubschrank 1 wiederum mit den beiden Stromschienensätzen 3 und 5 versehen. Der Stromschienensatz 3 ist mit Normalnetz N verbunden. Ein in diesem Fall als Ueberlastumschalter konzipierter Einschub weist drei Stromwandler, allenfalls vier, $W_3$ auf, die die momentanen Stromwerte in den einzelnen Stromschienen des Satzes 3 messen. An entsprechend vorgesehenen Auswerteeinheiten, beispielsweise auf einen Schwellwert ansprechend, generell bei 19 dargestellt, werden die momentan vorliegenden Stromwerte ausgewertet und bei Ueberschreiten von vorgegebenen Stromsollwerten lösen die Auswerteeinheiten 19, über eine schematisch bei 21 eingetragene ODER-Verknüpfung, eine Schaltereinheit 23 aus, welch letztere bei Stromüberlast in Satz 3 letzterem den Satz 5 parallelschaltet. Damit werden die Leiterquerschnitte jeder Phase des Satzes 3 um die Querschnitte des Satzes 5 vergrössert. Es versteht sich nun von selbst, dass je nach den Strombedürfnissen weiterer vorgesehener Einschübe letztere pro Phase auf eine Stromschiene des Satzes 3 und eine des Satzes 5 greifen, bei geringeren Strombedürfnissen jedoch auf eine der beiden Sätze allein.Die Umschaltung kann auch hier gegebenenfalls direkt am Schrank erfolgen.

In Fig. 4 sind weitere Einsatzmöglichkeiten des erfindungsgemässen Konzeptes dargestellt. Ein erster
Einschub $7_a$ greift eingangsseitig auf den Stromschienensatz 3 und umfasst elektrische Verarbeitungsaggregate, wie beispielsweise passive Impedanzen $\bar{Z}$, um
aus den elektrischen Signalen des Satzes 3 entsprechend gewandelte, ausgangsseitig auf den Satz 5 zu
geben. Diese Wandlung kann beispielsweise eine Phasendrehung der Phasenspannungen umfassen. Nun kann
ein weiterer Einschub $7_b$ bzw. $7_c$ wahlweise auf Netzspannung N oder der daraus abgeleiteten, auf den Satz
5 betrieben werden. Mit den Ausgängen P sind schematisch beliebige, am Schrank entsprechend realisierte
Steuerfunktionen oder Ueberwachungsfunktionen bekannter Art und Weise dargestellt. Einem weiteren Einschubschrank $7_b$ werden sowohl die Signale auf dem Satz
3 wie auch die Signale auf dem Satz 5 zugespiesen,
aus welchen wiederum Steuersignale P, allenfalls auch
unter Zuspeisung von Signalen anderer Einschübe erzeugt werden, oder es kann beispielsweise eine Ueberwachung eines, die beiden Sätze 3 und 5 koppelnden
Einschubes, wie des Einschubes $7_a$ vorgenommen werden.
Wie aus diesen wenigen Beispielen ersichtlich, wird
mit dem erfindungsgemässen Konzept eine weite Palette
von Möglichkeiten geschaffen, die an einem einzigen
Einschubschrank mittels entsprechend konzipierter
Einschubfunktionen ausgeführt werden können.

Patentansprüche:

1. Einschubschrank für mindestens einen Einschub, für dessen Betrieb ab dreiphasigem Netz, dadurch gekennzeichnet, dass im Schrank mindestens zwei Sätze (3, 5) von je mindestens drei vertikal verlaufenden Stromschienen angeordnet sind.

2. Einschubschrank nach Anspruch 1, dadurch gekennzeichnet, dass Umschaltorgane, vorzugsweise elektrisch gesteuert, vorgesehen sind, die den elektrischen Eingang für mindestens einen Einschub auf den einen und/oder auf den anderen Stromschienensatz (3, 5) schalten.

3. Einschubschrank, vorzugsweise nach mindestens einem der Ansprüche, wie nach Anspruch 2, dadurch gekennzeichnet, dass die Umschaltorgane elektrisch durch Betriebsbedingungen auf dem angeschalteten Stromschienensatz angesteuert werden.

4. Einschubschrank, vorzugsweise nach mindestens einem der Ansprüche, wie nach einem der Ansprüche 2 oder 3, dadurch gekennzeichnet, dass die Umschaltorgane (11, 15, 17) als Notstromumschalter bei Ausfall der Energie am einen Satz (3) auf den anderen (5) umschalten.

5. Einschubschrank, vorzugsweise nach mindestens einem der Ansprüche, wie nach einem der Ansprüche 2 bis 4, dadurch gekennzeichnet, dass die Umschaltorgane elektrisch gesteuert als Ueberlastschalter (23) ausgebildet sind und die Sätze (3, 5) bei Ueberlast des einen Satzes (3) parallel schalten.

6. Einschubschrank, vorzugsweise nach mindestens einem der Ansprüche, wie nach einem der Ansprüche 2 bis 5, mit mindestens einem Einschub, dadurch gekennzeichnet, dass der Einschub als Energieverteileinschub, eingangsseitig mit dem einen Satz (3), ausgangsseitig mit dem anderen Satz (5) verbunden ist.

7. Einschubschrank, vorzugsweise nach mindestens einem der Ansprüche, wie nach einem der Ansprüche 2 bis 6, mit mindestens einem Einschub, dadurch gekennzeichnet, dass für die Einschub/Stromschienenverbindung am Einschub mindestens ein Steckverbinder vorgesehen ist, für den Abgriff einer einzigen Stromschiene, einzeln montierbar.

8. Einschubschrank, vorzugsweise nach mindestens einem der Ansprüche, wie nach einem der Ansprüche 2 bis 5 mit mindestens einem Einschub, dadurch gekennzeichnet, dass die Umschaltorgane am Einschub angeordnet sind.

9. Einschubschrank, vorzugsweise nach mindestens einem der Ansprüche, wie nach einem der Ansprüche 1 bis 8, mit mindestens einem Einschub, dadurch gekennzeichnet, dass der Einschub pro abgegriffene Phase mindestens zwei Abgriffe aufweist.

10. Einschubschrank, vorzugsweise nach mindestens einem der Ansprüche, wie nach einem der Ansprüche 1 bis 9, mit mindestens einem Einschub, dadurch gekennzeichnet, dass der Einschub eingangsseitig mit dem einen Satz, ausgangsseitig mit dem anderen, verbunden ist.

FIG.1

FIG.2

FIG.3

FIG.4

Europäisches
Patentamt

**EUROPÄISCHER RECHERCHENBERICHT**

**0169994**
Nummer der Anmeldung

EP 85 10 6262

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-1 505 698 (GENERAL ELECTRIC)<br>* Seite 2, rechte Spalte, Letzter Absatz; Seite 3, linke Spalte * | 1 | H 02 B 1/08<br>H 02 B 1/20 |
| | --- | | |
| A | FR-A-2 161 253 (COMPAGNIE LEPAUTE)<br>* Ansprüche 1,2 * | 4 | |
| | ----- | | |

| RECHERCHIERTE SACHGEBIETE (Int. Cl 4) |
|---|
| H 02 B<br>H 02 H<br>H 02 J |

Der vorliegende Recherchenbericht wurde für alle Patentansprüche erstellt

| Recherchenort | Abschlußdatum der Recherche | Prüfer |
|---|---|---|
| DEN HAAG | 03-10-1985 | DAILLOUX C. |